# EUROPÄISCHE PATENTANMELDUNG

(11) **EP 1 462 480 A1**
(43) Veröffentlichungstag der Anmeldung: **29.09.2004**
(21) Anmeldenummer: 04004926.4
(22) Anmeldetag: 03.03.2004
(51) Int. Cl.: C08K 5/17, C08K 5/00, C08L 33/06, C09J 133/06, B65H 19/10

(54) **Klebemasse**

(30) Priorität: 26.03.2003 DE 10313652
(71) Anmelder: tesa AG, 20253 Hamburg (DE)
(72) Erfinder: Nagel, Christoph, 22529 Hamburg (DE); Götz, Kerstin, 22763 Hamburg (DE); Westphal, Andreas, 22049 Hamburg (DE); Wilck, Christine, 20253 Hamburg (DE); Gebbeken, Bernhard, Dr., 21075 Hamburg (DE)

(57) **Zusammenfassung**

Die Erfindung betrifft eine Klebemasse, die
(a) 25 bis 45 Gew.-% eines Polymers, bestehend aus
   (a1) 30 bis 60 Gew.-% Acrylsäure, 30 bis 60 Gew.-% Butylacrylat, 0 bis 40 Gew.-% Ethylhexylacrylat und 0 bis 10 Gew.-% eines Vinylmonomers; oder
   (a2) 50 bis 90 Gew.-% Acrylsäure, 10 bis 50 Gew.-% Butylacrylat und 0 bis 10 Gew.-% eines Vinylmonomers; oder
   (a3) 50 bis 90 Gew.-% Acrylsäure, 30 bis 5 Gew.-% Butylacrylat, 30 bis 5 Gew.-% Ethylhexylacrylat und 0 bis 10 Gew.-% eines Vinylmonomers;
(b) 55 bis 75 Gew.-% ethoxyliertes C₂₀-Alkylamin als Weichmacher und
(c) 0,5 bis 1,5 Gew.-% eines Vernetzers umfaßt.

## Beschreibung

Die Erfindung betrifft eine Klebemasse für ein Klebeband, das in der papierherstellenden oder -weiterverarbeitenden Industrie für den fliegenden Rollenwechsel an z. B. Streichmaschinen bzw. Druckmaschinen mit Temperaturbeaufschlagung eingesetzt wird.

In der papierherstellenden oder -verarbeitenden Industrie sind unterschiedliche Klebebänder für den fliegenden Rollenwechsel bekannt. Diese Klebebänder zeichnen sich vor allem durch einen hohen Tack aus, der benötigt wird, um ein sicheres Ankleben beim Rollenwechsel mit hohen Geschwindigkeiten zu gewährleisten.

Des weiteren werden Klebebänder mit hoher Scherfestigkeit für Spliceanwendungen eingesetzt, bei der der Splice erhöhten Temperaturen ausgesetzt wird, so z. B. in Kalandern oder in Druckmaschinen mit Trockeneinheit.

Werden Klebebänder für den fliegenden Rollenwechsel erhöhten Temperaturen ausgesetzt, besteht die Gefahr, daß sich der Splice in der Anwendung öffnet, da die Klebemasse unter der hohen Temperatur kohäsiv versagt.

Werden andererseits Klebebänder für Hochtemperatur-Anwendungen beim fliegenden Rollenwechsel eingesetzt, besteht die Gefahr, daß die ablaufende Papierbahn nicht genügend Kontakt zum Klebeband bekommt und so ein Versagen beim Rollenwechsel stattfindet.

Zur Lösung dieses Problems sind nach dem Stand der Technik mehrere Möglichkeiten bekannt, die nachstehend erläutert werden. Alle Lösungsverfahren bergen in sich aber Schwächen durch Erhöhung der Splicekosten bzw. Reduktion der Spliceeffizienz.

Zum einen besteht die Möglichkeit mit komplizierten Splicemustergeometrien die Verklebungsfläche zu erhöhen. Die Vergrößerung der Verklebungsfläche soll die Splicesicherheit in der Wärmezone verbessern bzw. die Kontaktfläche so verändern, daß auch wenig tackige Klebebänder den Kontakt zur Papierbahn herstellen.

Zum anderen besteht die Möglichkeit beim eigentlichen Splicevorgang die Geschwindigkeit zu reduzieren, was die Kontaktzeit erhöht und somit den Splicevorgang sicherer macht.

Beide Verfahren erhöhen jedoch die Kosten oder reduzieren die Spliceeffizienz bzw. bergen die Gefahr von Reißern.

Die verwendeten Klebemassen können in hochtackige, repulpierbare Klebemassen (A) und hochscherfeste, repulpierbare Klebmassen (B) unterschieden werden.
(A) Als hochtackige, repulpierbare Klebemassen für den fliegenden Rollenwechsel können Acrylatselbstklebemassen eingesetzt werden, die ein Polymer aus 30 bis 60 % Acrylsäure, 30 bis 60 % Butylacrylat, 0 bis 40 % Ethylhexylacrylat und 0 bis 10 % eines Vinylmonomers sowie als Weichmacherzusatz ethoxylierte Alkylamine umfassen. Die ethoxylierten Alkylamine sind vorzugsweise ethoxylierte C₁₆-C₁₈-Alkylamine, die weiter vorzugsweise 2 bis 25 Ethoxy-Einheiten aufweisen.
   Das Mischungsverhältnis zwischen Weichmacher und Polymer beträgt 55 bis 75 Gew.-% Weichmacher und 25 bis 45 Gew.-% Polymer. Die Polymerisation erfolgt radikalisch in polaren Lösungsmitteln. Es erfolgt eine Teilvernetzung mit 0,3 bis 0,75 Gew.-% Aluminiumchelat, bezogen auf die Gesamtmenge.
(B) Als hochscherfeste, repulpierbare Klebmasse für hohe Temperaturbelastungen können Acrylatselbstklebemassen eingesetzt werden, die ein Polymer aus 50 bis 90 Gew.-% Acrylsäure, 10 bis 50 Gew.-% Butylacrylat und 0 bis 10% eines Vinylmonomers oder aus 50 bis 90 Gew.-% Acrylsäure, 30 bis 5 Gew.-% Butylacrylat, 30 bis 5 Gew.-% Ethylhexylacrylat und 0 bis 10 Gew.-% eines Vinylmonomers sowie einen Weichmacherzusatz umfaßt. Als Weichmacherzusatz werden ethoxylierte Alkylamine, vorzugsweise ethoxylierte C₁₆-C₁₈-Alkylamine verwendet, die weiter vorzugsweise 2 bis 25 Ethoxy-Einheiten aufweisen.

Das Mischungsverhältnis von Weichmacher und Polymer beträgt 55 bis 75 Gew.-% Weichmacher und 25 bis 45 Gew.-% Polymer.

Die Polymerisation erfolgt radikalisch in polaren Lösungsmitteln. Es erfolgt eine Teilvernetzung mit 0,5 bis 1,5 Gew-% Aluminiumchelat, bezogen auf die Gesamtmenge.

Für die hochscherfesten Massen wird der Anteil der kurzkettigen Monomere, wie z.B. Acrylsäure im Gesamtpolymer erhöht und der Anteil der längerkettigen Ester verringert. Dies hat allerdings auch die Konsequenz, daß diese Selbstklebemassen deutlich weniger Tack aufweisen.

Der Erfindung liegt die Aufgabe zugrunde, eine Klebemasse mit hoher Scherfestigkeit und hohem Tack anzugeben.

Diese Aufgabe wird durch die Merkmale des Anspruchs 1 gelöst. Zweckmäßige Ausgestaltungen der Erfindungen ergeben sich aus den Merkmalen der Ansprüche 2 bis 5.

Nach Maßgabe der Erfindung ist eine Klebemasse vorgesehen, die
(a) 25 bis 45 Gew.-% eines Polymers, bestehend aus
   (a1) 30 bis 60 Gew.-% Acrylsäure, 30 bis 60 Gew.-% Butylacrylat, 0 bis 40 Gew.-% Ethylhexylacrylat und 0 bis 10 Gew.-% eines Vinylmonomers; oder
   (a2) 50 bis 90 Gew.-% Acrylsäure, 10 bis 50 Gew.-% Butylacrylat und 0 bis 10 Gew.-% eines Vinylmonomers; oder
   (a3) 50 bis 90 Gew.-% Acrylsäure, 30 bis 5 Gew.-% Butylacrylat, 30 bis 5 Gew.-% Ethylhexylacrylat und 0 bis 10 Gew.-% eines Vinylmonomers;
(b) 55 bis 75 Gew.-% ethoxyliertes C₂₀-Alkylamin als Weichmacher und
(c) 0,5 bis 1,5 Gew.-% eines Vernetzers umfaßt.

Überraschenderweise wurde festgestellt, daß eine derartige Klebemasse deutlich erhöhte Scherfestigkeiten im Vergleich zu einer unter (B) definierten Klebmasse zeigt, wobei die Tackwerte nahezu gleich sind oder nur einen geringen Abfall zeigen. Die Erfindung stellt somit hochscherfeste, hochtackige und repulpierbare Klebemassen bereit, so daß die Lösungsverfahren nach dem Stand der Technik vollkommen oder weitestgehend entbehrlich werden. Die erfindungsgemäßen Klebemassen können somit für den fliegenden Rollenwechsel mit Temperaturbeaufschlagung eingesetzt werden.

Zweckmäßigerweise wird das Polymer durch radikalische Polymerisation in polaren Lösungsmitteln hergestellt. Die Klebemasse kann durch Zusatz eines Vernetzers teilvernetzt werden, wobei vorzugsweise 0,5 bis 1 Gew-% Vernetzer, bezogen auf die Gesamtmenge der Klebemasse, beigemischt werden. Als Vernetzer wird vorzugsweise Aluminiumchelat verwendet.

Eine bevorzugte Klebemasse umfaßt ein Polymer, das aus 43 Gew.-% Acrylsäure, 50 Gew.-% Butylacrylat, 7 Gew.-% eines Vinylmonomers besteht. Dieses Polymer wird zweckmäßigerweise in einem polaren Lösungsmittel durch radikalische Polymerisation hergestellt und ethoxyliertes C₂₀-Alkylamin als Weichmacher zugegeben. Das Mischungsverhältnis zwischen Weichmacher und Polymer beträgt 67% Weichmacher und 33% Polymer. Es erfolgt eine Teilvernetzung mit 1 Gew.-% Aluminiumchelat, bezogen auf die Gesamtmenge der Klebemasse.

Diese Klebemasse zeigt überraschend eine deutlich erhöhte Scherfestigkeit im Vergleich zu den unter (B) angegebenen Klebemassen bei einem nur geringen Abfall der Tackwerte.

Bevorzugte Zusammensetzungen der Klebemasse sind in der Tabelle 1 aufgeführt.

**Tabelle 1**

| Bsp.-Nr. | Polymer (Gew.-%) | Weichmacher (Gew.-%) | Vernetzer (Gew.-%) |
|---|---|---|---|
| 1 | 31 | 68,2 | 0,8 |
| 2 | 33 | 66 | 1 |
| 3 | 34,5 | 64,2 | 0,8 |
| 4 | 35 | 64,3 | 1,2 |

Die Klebemassen der Beispiele 1, 3 und 4 zeigten hohe Scherfestigkeiten mit nahezu gleichen Tackeigenschaften wie die unter (B) beschriebenen Klebemassen. Die Klebemasse des Beispiels 1 zeigte eine hohe Scherfestigkeit bei einem sehr geringen Abfall des Tackwertes im Vergleich zu den unter (B) definierten Klebemassen.

## Patentansprüche

1. Klebemasse, umfassend
(a) 25 bis 45 Gew.-% eines Polymers, bestehend aus
(a1) 30 bis 60 Gew.-% Acrylsäure, 30 bis 60 Gew.-% Butylacrylat, 0 bis 40 Gew.-% Ethylhexylacrylat und 0 bis 10 Gew.-% eines Vinylmonomers; oder
(a2) 50 bis 90 Gew.-% Acrylsäure, 10 bis 50 Gew.-% Butylacrylat und 0 bis 10 Gew.-% eines Vinylmonomers; oder
(a3) 50 bis 90 Gew.-% Acrylsäure, 30 bis 5 Gew.-% Butylacrylat, 30 bis 5 Gew.-% Ethylhexylacrylat und 0 bis 10 Gew.-% eines Vinylmonomers;
(b) 55 bis 75 Gew.-% ethoxyliertes C₂₀-Alkylamin als Weichmacher und
(c) 0,5 bis 1,5 Gew.-% eines Vernetzers.

2. Klebemasse nach Anspruch 1, **dadurch gekennzeichnet, daß** das Polymer in einem polaren Lösungsmittel radikalisch polymerisiert worden ist.

3. Klebemasse nach Anspruch 1, **dadurch gekennzeichnet, daß** sie teilweise vernetzt worden ist.

4. Klebemasse nach Anspruch 1, **dadurch gekennzeichnet, daß** der Vernetzer Aluminiumchelat ist.

5. Klebemasse nach Anspruch 1, umfassend
(a) 33 Gew.-% eines Polymers, bestehend aus 43 Gew.-% Acrylsäure, 50 Gew.-% Butylacrylat und 7 Gew.-% eines Vinylmonomer;
(b) 66 Gew.-% ethoxyliertes C₂₀-Alkylamin als Weichmacher und
(c) 1 Gew.-% Aluminiumchleat.
